# EUROPEAN PATENT SPECIFICATION

(11) **EP 3 720 041 B1**
(45) Date of publication and mention of the grant of the patent: **31.07.2024**
(21) Application number: 18884074.8
(22) Date of filing: 30.11.2018
(51) Int. Cl.: H04L 9/32, G06Q 20/38, G06F 21/64, G06Q 20/06, G06Q 20/40, H04L 9/00

(54) **METHOD FOR MAKING SMART CONTRACT EXECUTABLE IN BLOCK CHAIN NETWORK, AND NODE**
VERFAHREN ZUR HERSTELLUNG VON IN EINEM BLOCKCHAIN-NETZWERK AUSFÜHRBAREN CHIPKARTEN UND KNOTEN
PROCÉDÉ POUR RENDRE UN CONTRAT INTELLIGENT EXÉCUTABLE DANS UN RÉSEAU DE CHAÎNE DE BLOCS, ET NOEUD

(30) Priority: 01.12.2017 JP 2017231509
(43) Date of publication of application: 07.10.2020
(73) Proprietor: bitFlyer Blockchain, Inc., Tokyo 1076237 (JP)
(72) Inventor: KANO Yuzo, Tokyo 1076237 (JP); KOMIYAMA Takafumi, Tokyo 1076237 (JP)
(74) Representative: Marks & Clerk LLP
(86) International application number: PCT/JP2018/044279
(87) International publication number: WO 2019/107565

(56) References cited:
- US-A1- 2016 260 095
- US-A1- 2016 292 672
- US-A1- 2017 287 068
- US-A1- 2017 287 090
- US-A1- 2017 287 090
- CHRISTIAN CACHIN ET AL: "Non-Determinism in Byzantine Fault-Tolerant Replication", OPODIS, 19 December 2016 (2016-12-19), pages 1 - 20, XP055639264, DOI: 10.4230/LIPIcs.OPODIS.2016.24
- ELLIS STEVE ET AL: "A Decentralized Oracle Network", 4 September 2017 (2017-09-04), XP093125819, Retrieved from the Internet <URL:https://research.chain.link/whitepaper-v1.pdf> [retrieved on 20240131]

## Description

### TECHNICAL FIELD

The present invention relates to a method for making a smart contract executable in a blockchain network and a node for configuring the network. More particularly, the present invention relates to a method for deterministically making a smart contract with non-deterministic external data executable in a blockchain network and a node for configuring the network.

### BACKGROUND

A "smart Contract" which makes a transaction automatically executable by programming or coding a contract on a blockchain network is attracting attention. For example, each node of a blockchain network accumulates transactions in a memory pool, and a node that serves as a proposer generates a block from one or more of the accumulated transactions to make a consensus proposal in the network. Depending on the design of the blockchain, a desired contractual content may be described in a transaction, and if a consensus is formed on the adoption of the block containing such a transaction, the block is added to each node's blockchain so that the described content becomes automatically executable when the smart contract is invoked as necessary.

For example, as a hypothetical example, suppose that each node has a list of shareholders of a company and the number of respective shares. Then, it is assumed that the contractual content is the transaction of "transferring half of the shares held by shareholder S from shareholder S to shareholder B". If each node is given a rule that uniquely selects shareholder S as a seller and shareholder B as a buyer according to the height of the block, when a transaction invoking this content is executed, shareholder S and shareholder B are automatically selected according to the rule and the transfer is made. After execution, each node updates its shareholder list according to the changes in the number of respective shares.

Although we have given a special example here, if it is possible to uniquely determine the variables contained in the contractual content, the blockchain network can maintain the identity of the blockchains respective nodes hold, as well as the identity of the shareholder lists in the above example. Patent document US2017/287090 is regarded as relevant prior art.

### SUMMARY

### Technical Problem

There is a reason for giving a special case in the above hypothetical case. Whereas the network as a whole is unreliable unless the state at each node is maintained identically, there are restrictions on the content of the contract that can be described in order to maintain the identity of the state at each node.

For example, if the contractual content of the transaction is "if the share price exceeds 1,000 yen, transfer half of the shares held by shareholder S from shareholder S to shareholder B", each node must be able to refer to the share price at the time of execution of this transaction. The value of the share price cannot be referenced within the blockchain network. It is necessary to make an inquiry to a system of an external institution, such as a stock exchange. The time at which each node makes an inquiry is not exactly the same, and therefore the value of the share price obtained as a result of the inquiry is also not the same. Thus, a situation where one node determines that the share price is above 1,000 yen, while another node determines that the share price is not above 1,000 yen may be caused, which leads to inconsistency in the states of respective nodes.

In other words, a smart contract which use non-deterministic external data that can vary from node to node cannot be realized with the current mechanism. In order for a smart contract to become widely used in the future, it is essential to resolve this limitation and make a variety of

### external data available.

The present invention has been made in view of such a problem, and its objective is to provide a method and a program for making a smart contract using non-deterministic external data to be deterministically executable in a blockchain network, and a node for constituting the network.

As used herein, "deterministic" means that the same result can be obtained at any node or that it can be evaluated as such, and "non-deterministic" means that this is not necessarily the case.

In addition, the term "smart contract" is used in several meanings, but it will be used herein in the sense of code that executes the one or more described processes when the determined condition is satisfied.

### Solution to the Problem

To achieve such an objective, the first aspect of the present invention is a method for making a smart contract using non-deterministic external data to be executable in a blockchain network, comprising steps of: a node comprising the blockchain network receiving a block with a transaction which invokes a smart contract, the node validating the block, and the node adding the block to a blockchain of the node after a consensus is built on adoption of the block, wherein the block includes a value of the external data, and wherein the validation is performed by comparing the value of the external data included in the block with a value acquired by the node.

Also, the second aspect of the present invention is the method according to the first aspect of the present invention, wherein the smart contract is a code for performing one or more described processes when executed if a condition for using the external data is satisfied.

Also, the third aspect of the present invention is the method according to the first or the second aspect, wherein the value of the external data is acquired by referring to a system external to the blockchain network.

Also, the fourth aspect of the present invention is the method according to any one of the first to the third aspect, wherein in the external data reference destination is represented by a format where access destination is interpretable by each node.

Also, the fifth aspect of the present invention is the method according to any one of the first to the fourth aspects, wherein the block comprises one or more transactions and a correspondence between names of one or more external data used in the one or more transactions and their values.

Also, the sixth aspect of the present invention is the method according to any of the first to the fifth aspects, the validation is performed based on a validation rule stored in advance in each node.

Also, the seventh aspect of the present invention is the method according to any of the first to the fifth aspects, said validation is performed based on a validation rule specified as a parameter of the external data used in the smart contract.

Also, the eighth aspect of the invention is the method according to the sixth or seventh aspect, wherein validation rule determines the value of the external data as valid if the value of the external data is within a predetermined range of a value obtained by the node.

Also, the ninth aspect of the present invention is a program for causing a computer to perform a method for making a smart contract using non-deterministic external data to be executable in a blockchain network, the method comprising steps of: a node comprising the blockchain network receiving a block with a transaction which invokes a smart contract, the node validating the block, and the node adding the block to a blockchain of the node after a consensus is built on adoption of the block, wherein the block includes a value of the external data, and wherein the validation is performed by comparing the value of the external data included in the block with a value acquired by the node.

Also, the tenth aspect of the present invention is a node for configuring a blockchain network capable of executing a smart contract using non-deterministic external data, wherein the node receives a block including a transaction which invokes a smart contract to validate the block, and adds the block to a blockchain of the node after a consensus is built on adoption of the block, wherein the block includes a value of the external data, and wherein the validation is performed by comparing the value of the external data included in the block with a value acquired by the node.

According to one embodiment of the present invention, by validating the value of the external data at the time of validation of a block including a transaction invoking a smart contract using non-deterministic external data, the parameters required at the time of automatic execution of the smart contract can be avoid becoming non-deterministic, and various external data can be made available.

### BREIF DESRIPTION OF THE DRAWINGS

FIG 1 is a diagram showing a blockchain network according to one embodiment of the present invention.

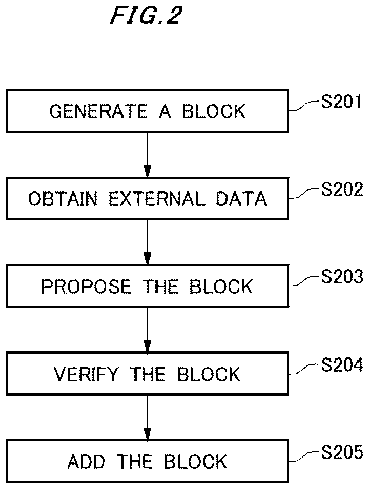

FIG 2 is a flow diagram showing the operation of a proposer node in a blockchain network according to one embodiment of the present invention.
FIG 3 is a schematic diagram showing the data structure of the block according to one embodiment of the present invention.

### DETAILED DESCRIPTION

The embodiments of the present invention will be described in detail below.

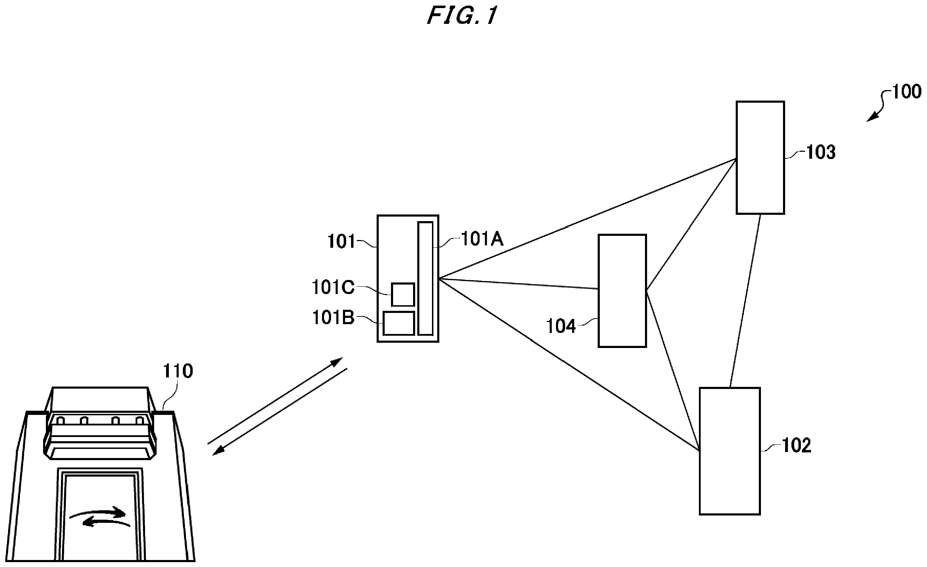

Figure 1 shows a blockchain network according to the first embodiment of the present invention. The network 100 includes a first node 101, a second node 102, a third node 103, and a fourth node 104. Each of these nodes have a blockchain and will participate in the consensus formation on the adoption of a new block. In Fig. 1, an example of four is shown, but this is only an example. Alternatively, the network 100 may include nodes that do not participate in consensus formation. In the following, the case where the first node 101 is a proposer of consensus formation will be described.

The first node 101 comprises a communication unit 101A such as a communication interface, etc., a processing unit 101B such as a processor, a CPU, etc., and a storage unit 101C including a storage device or medium such as a memory, a hard disk, etc., and can be configured by executing a program to perform each process. The first node 101 can include one or more devices or servers. The program can include one or more programs, and can be stored on a computer-readable storage medium to be a non-transitory program product.

The first node 101 generates a new block from one or more transactions accumulated in the memory unit 101C or a storage device or a storage medium accessible from the first node 101 by using it as a memory pool (S201). At least one of these transactions invokes a smart contract. A invoking in a transaction of a smart contract may include describing the smart contract itself in the transaction.

With respect to a transaction invoking a smart contract, the first node 101 queries the external system for the non-deterministic external data used by the smart contract for the transaction invoking the smart contract. For example, if the code of the smart contract is to "transfer half of the shares held by shareholder S from shareholder S to shareholder B if the share price exceeds 1,000 yen," the smart contract makes an inquiry on the share price data to the stock exchange system 110.

For example, the share price may represent that it is external data by a predetermined format, and the first node 101 may interpret the predetermined format to obtain share price data from a specified destination at the time of generation of the block, or before or after that time. As an example, an external data can be represented by a function format as below:
Ext (<URL>, <name>)
"Ext" indicates that it is external, and the specified URL indicates a reference destination on a computer network. In addition to the above-mentioned format, the name may also be represented as below in the case of a share price:
Ext_shr (<URL>)

The reference destination do not necessarily have to be identical, and it may be represented in format in which each node can interpret the access destination. For example, a stock code may be used as a reference destination and each node may obtain the share price of the stock code from different sources or access destinations that give the share price of the stock code.

The obtained data is included in the generated block, in addition to one or more transactions (S202). If there is a single piece of external data, it is not necessarily necessary to specify a name for the external data, but if there may be more than one piece of external data, each piece of external data can be given a name and a list of external data which associates the names with their values can be included in the block. Here, the values of the external data are not limited to the list format as long as the correspondence between the names and their values is maintained.

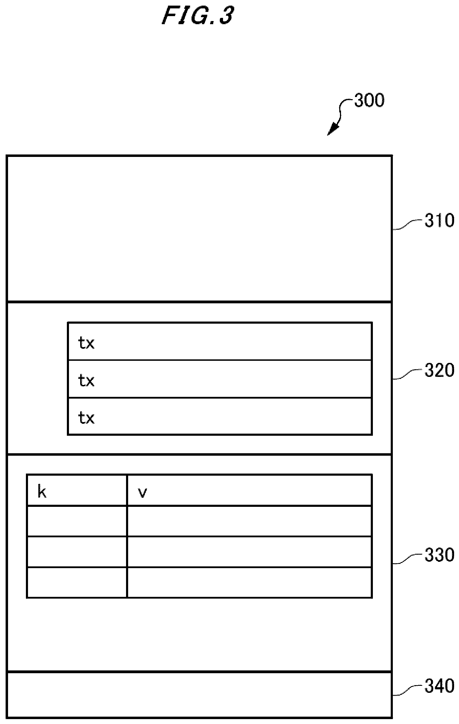

Figure 3 shows an example of the data structure of the block according to the present embodiment. Block 300 has a header 310, a body 320, additional data 330, and evidence 340. Although not necessarily categorized in this way, the body 320 includes one or more transactions (tx), and the additional data 330 includes a correspondence between the names or keys (k) of the one or more pieces of external data used in these transactions and their values (v) .

The first server 101 transmits the generated block as a proposal to a plurality of nodes (which may include own node) that participate in the consensus formation (S203). At each node that receives the block, the block is verified based on a predetermined validation rule (S204), and the consensus on the adoption of the block is formed in the network 100 when the predetermined condition is satisfied.

Here, in this embodiment, in addition to the validation of transactions, the validation rule also validates the external data. For example, considering the second node 102 that has received the block as an example, the second node 102 can make an inquiry to the stock exchange system 110 to obtain the share price data, compares it to the value of the share price included in the block, and determine that it is valid if the difference is within a predetermined range. An example is the rule that returns true if the difference between the two is ±5% and otherwise returns false. A validation rule for the external data can be stored in advance in each node, or it can be held as a parameter of an external data function as is done for a reference destination and name. Or, it may be included in the definition of an external data.

After a consensus has been formed on the network 100, each node adds the block in question to the blockchain of each node (S205) and executes the described content.

In this way, by validating the external data when forming a consensus on a block containing a transaction that invokes a smart contract that uses non-deterministic external data, the parameters required for the automatic execution of the smart contract can be avoided to be non-deterministic and the state changes of respective nodes can becomes consistent.

Non-deterministic external data include query result from an external database or external system.

Alternatively, the external data may be data that can be obtained from the blockchain network 100, such as time, random numbers, etc. These pieces of data may, for example, be obtained by each node from its own node.

In the above explanation, the definition of an external data function is considered to be done in the smart contract or the transaction that invokes it, but if a transaction that defines an external data function is created and the consensus is formed on the block containing it in advance, the external data function can be used in the smart contract by referring to it in a block following the block.

It is to be noted that if the term "only" is not mentioned, such as in "on the basis of × only", "according to × only", or "in the case of × only", it is assumed that additional information may also be taken into account in the present specification.

In addition, as a caveat, even if there are aspects of a method, program, terminal, device, server or system (hereinafter referred to as "method, etc.") that perform operations different from those described herein, each aspect of the invention is intended to perform the same operation as one of the operations described herein, and the existence of an operation different from those described herein does not mean that said method, etc. is outside the scope of each aspect of the invention.

### REFERENCE SIGNS LIST

- 100: blockchain network
- 101: first node
- 101A: communication unit
- 101B: processing unit
- 101C: storage unit
- 102: second node
- 103: third node
- 104: fourth node
- 110: external system
- 300: block
- 310: header
- 320: body
- 330: additional data
- 340: evidence

## Claims

1. A method for making a smart contract, using non-deterministic external data, executable in a blockchain network, comprising the steps of:
a node receiving a block with a transaction which invokes the smart contract that uses the non-deterministic external data, wherein the node is part of the blockchain network,
the node validating the block, and
the node adding the block to a blockchain of the node after a consensus is formed on adoption of the block,
wherein a reference destination of the non-deterministic external data is represented by a format from which an access destination is interpretable by the node,
wherein the block includes a value of the non-deterministic external data,
and
wherein the validation is performed by comparing the value of the non-deterministic external data included in the block with a value acquired by the node from the access destination.

2. The method according to claim 1, wherein the smart contract is a code for performing one or more described processes when executed if a condition for using the non-deterministic external data is satisfied.

3. The method according to claim 2, wherein the value of the non-deterministic external data is acquired by referring to a system external to the blockchain network.

4. The method according to any one of claims 1 to 3, wherein the block comprises one or more transactions and a correspondence between names of one or more non-deterministic external data used in the one or more transactions and their values.

5. The method according to any one of claims 1 to 4, wherein the validation is performed based on a validation rule stored in advance in each node.

6. The method according to any one of claims 1 to 4, wherein the validation is performed based on a validation rule specified as a parameter of the non-deterministic external data used in the smart contract.

7. The method according to claim 5 or 6, wherein the validation rule determines the value of the non-deterministic external data as valid if the value of the non-deterministic external data is within a predetermined range of the value acquired by the node.

8. A program for causing a computer to perform a method for making a smart contract, using non-deterministic external data, executable in a blockchain network, the method comprising the steps of:
a node receiving a block with a transaction which invokes the smart contract that uses the non-deterministic external data, wherein the node is part of the blockchain network,
the node validating the block, and
the node adding the block to a blockchain of the node after a consensus is formed on adoption of the block,
wherein a reference destination of the non-deterministic external data is represented by a format from which an access destination is interpretable by the node,
wherein the block includes a value of the non-deterministic external data, and
wherein the validation is performed by comparing the value of the non-deterministic external data included in the block with a value acquired by the node from the access destination.

9. A node which is part of a blockchain network capable of executing a smart contract, using non-deterministic external data, wherein the node is configured to:
receive a block including a transaction which invokes the smart contract that uses the
non-deterministic external data to validate the block, and
add the block to a blockchain of the node after a consensus is formed on adoption of the block,
wherein a reference destination of the non-deterministic external data is represented by a format from which an access destination is interpretable by the node,
wherein the block includes a value of the non-deterministic external data, and
wherein the validation is performed by comparing the value of the non-deterministic external data included in the block with a value acquired by the node from the access destination.

## Patentansprüche

1. Verfahren, um einen intelligenten Vertrag, der nicht-deterministische externe Daten verwendet, in einem Blockchain-Netzwerk ausführbar zu machen, umfassend die folgenden Schritte:
ein Knoten empfängt einen Block mit einer Transaktion, die den intelligenten Vertrag aufruft, der die nicht-deterministischen externen Daten verwendet, wobei der Knoten Teil des Blockchain-Netzwerks ist,
der Knoten validiert den Block, und
der Knoten fügt den Block zu einer Blockchain des Knotens hinzu, nachdem ein Konsens über eine Annahme des Blocks gebildet ist,
wobei ein Referenzziel der nicht-deterministischen externen Daten durch ein Format dargestellt wird, von dem aus ein Zugriffsziel durch den Knoten interpretiert werden kann,
wobei der Block einen Wert der nicht-deterministischen externen Daten einschließt, und
wobei die Validierung durch Vergleichen des in dem Block eingeschlossenen Wertes der nicht-deterministischen externen Daten mit einem Wert durchgeführt wird, der durch den Knoten von dem Zugriffsziel erfasst wird.

2. Verfahren nach Anspruch 1, wobei der intelligente Vertrag ein Code zum Durchführen eines oder mehrerer beschriebener Prozesse ist, wenn er ausgeführt wird, wenn eine Bedingung für ein Verwenden der nicht-deterministischen externen Daten erfüllt ist.

3. Verfahren nach Anspruch 2, wobei der Wert der nicht-deterministischen externen Daten durch Bezugnahme auf ein System außerhalb des Blockchain-Netzwerks erfasst wird.

4. Verfahren nach einem der Ansprüche 1 bis 3, wobei der Block eine oder mehrere Transaktionen und eine Korrespondenz zwischen Namen von einem oder mehreren nicht-deterministischen externen Datenelementen, die in der einen oder den mehreren Transaktionen verwendet werden, und ihren Werten umfasst.

5. Verfahren nach einem der Ansprüche 1 bis 4, wobei die Validierung auf der Grundlage einer im Voraus in jedem Knoten gespeicherten Validierungsregel durchgeführt wird.

6. Verfahren nach einem der Ansprüche 1 bis 4, wobei die Validierung auf der Grundlage einer Validierungsregel durchgeführt wird, die als ein Parameter der nicht-deterministischen externen Daten, die in dem intelligenten Vertrag verwendet werden, spezifiziert ist.

7. Verfahren nach Anspruch 5 oder 6, wobei die Validierungsregel den Wert der nicht-deterministischen externen Daten als gültig bestimmt, wenn der Wert der nicht-deterministischen externen Daten innerhalb eines vorbestimmten Bereichs des von dem Knoten erfassten Wertes liegt.

8. Programm, um einen Computer zu veranlassen, ein Verfahren durchzuführen, um einen intelligenten Vertrag, der nicht-deterministische externe Daten verwendet, , in einem Blockchain-Netzwerk ausführbar zu machen, wobei das Verfahren die folgenden Schritte umfasst:
ein Knoten empfängt einen Block mit einer Transaktion, die den intelligenten Vertrag aufruft, der die nicht-deterministischen externen Daten verwendet, wobei der Knoten Teil des Blockchain-Netzwerks ist,
der Knoten validiert den Block, und
der Knoten fügt den Block zu einer Blockchain des Knotens hinzu, nachdem ein Konsens über eine Annahme des Blocks gebildet ist,
wobei ein Referenzziel der nicht-deterministischen externen Daten durch ein Format dargestellt wird, von dem aus ein Zugriffsziel durch den Knoten interpretiert werden kann,
wobei der Block einen Wert der nicht-deterministischen externen Daten einschließt, und
wobei die Validierung durch Vergleichen des in dem Block eingeschlossenen Wertes der nicht-deterministischen externen Daten mit einem Wert durchgeführt wird, der durch den Knoten von dem Zugriffsziel erfasst wird.

9. Knoten, der Teil eines Blockchain-Netzwerks ist, das in der Lage ist, einen intelligenten Vertrag auszuführen, der nicht-deterministische externe Daten verwendet, wobei der Knoten zu Folgendem konfiguriert ist:
Empfangen eines Blocks, der eine Transaktion einschließt, die den intelligenten Vertrag aufruft, der die nicht-deterministischen externen Daten verwendet, um den Block zu validieren, und
Hinzufügen des Blocks zu einer Blockchain des Knotens, nachdem ein Konsens über eine Annahme des Blocks gebildet ist,
wobei ein Referenzziel der nicht-deterministischen externen Daten durch ein Format dargestellt wird, von dem aus ein Zugriffsziel durch den Knoten interpretiert werden kann,
wobei der Block einen Wert der nicht-deterministischen externen Daten einschließt, und
wobei die Validierung durch Vergleichen des in dem Block eingeschlossenen Wertes der nicht-deterministischen externen Daten mit einem Wert durchgeführt wird, der durch den Knoten von dem Zugriffsziel erfasst wird.

## Revendications

1. Procédé pour rendre un contrat intelligent, qui utilise des données externes non-déterministes, exécutable dans un réseau de chaîne de blocs, comprenant les étapes suivantes :
la réception, par un noeud, d'un bloc avec une transaction qui invoque le contrat intelligent qui utilise les données externes non-déterministes, dans lequel le noeud fait partie du réseau de chaîne de blocs,
la validation du bloc par le noeud, et
l'ajout, par le noeud, du bloc à une chaîne de blocs du noeud après qu'un consensus est formé sur une adoption du bloc,
dans lequel une destination de référence des données externes non-déterministes est représentée par un format à partir duquel une destination d'accès est interprétable par le noeud,
dans lequel le bloc inclut une valeur des données externes non-déterministes, et
dans lequel la validation est réalisée en comparant la valeur des données externes non-déterministes incluse dans le bloc avec une valeur acquise par le noeud à partir de la destination d'accès.

2. Procédé selon la revendication 1, dans lequel le contrat intelligent est un code pour réaliser un ou plusieurs processus décrits lorsqu'il est exécuté si une condition pour utiliser les données externes non-déterministes est satisfaite.

3. Procédé selon la revendication 2, dans lequel la valeur des données externes non-déterministes est acquise en se référant à un système extérieur au réseau de chaîne de blocs.

4. Procédé selon l'une quelconque des revendications 1 à 3, dans lequel le bloc comprend une ou plusieurs transactions et une correspondance entre des noms d'une ou plusieurs données externes non-déterministes utilisées dans les une ou plusieurs transactions et leurs valeurs.

5. Procédé selon l'une quelconque des revendications 1 à 4, dans lequel la validation est réalisée sur la base d'une règle de validation stockée par avance dans chaque noeud.

6. Procédé selon l'une quelconque des revendications 1 à 4, dans lequel la validation est réalisée sur la base d'une règle de validation spécifiée comme un paramètre des données externes non-déterministes utilisées dans le contrat intelligent.

7. Procédé selon la revendication 5 ou 6, dans lequel la règle de validation détermine la valeur des données externes non-déterministes comme valide si la valeur des données externes non-déterministes est dans une plage prédéterminée de la valeur acquise par le noeud.

8. Programme pour amener un ordinateur à réaliser un procédé pour rendre un contrat intelligent, qui utilise des données externes non-déterministes, exécutable dans un réseau de chaîne de blocs, le procédé comprenant les étapes suivantes :
la réception, par un noeud, d'un bloc avec une transaction qui invoque le contrat intelligent qui utilise les données externes non-déterministes, dans lequel le noeud fait partie du réseau de chaîne de blocs,
la validation du noeud parle bloc, et
l'ajout, par le noeud, du bloc à une chaîne de blocs du noeud après la formation d'un consensus sur l'adoption du bloc,
dans lequel une destination de référence des données externes non-déterministes est représentée par un format à partir duquel une destination d'accès est interprétable par le noeud,
dans lequel le bloc inclut une valeur des données externes non-déterministes, et
dans lequel la validation est réalisée en comparant la valeur des données externes non-déterministes incluse dans le bloc avec une valeur acquise par le noeud à partir de la destination d'accès.

9. Noeud qui fait partie d'un réseau de chaîne de blocs capable d'exécuter un contrat intelligent, qui utilise des données externes non-déterministes, dans lequel le noeud est configuré pour :
recevoir un bloc incluant une transaction qui invoque le contrat intelligent qui utilise les données externes non-déterministes pour valider le bloc, et
ajouter le bloc à une chaîne de blocs du noeud après la formation d'un consensus sur une adoption du bloc,
dans lequel une destination de référence des données externes non-déterministes est représentée par un format à partir duquel une destination d'accès est interprétable par le noeud,
dans lequel le bloc inclut une valeur des données externes non-déterministes, et
dans lequel la validation est réalisée en comparant la valeur des données externes non-déterministes incluse dans le bloc avec une valeur acquise par le noeud à partir de la destination d'accès.
